# EUROPEAN PATENT APPLICATION

(11) **EP 3 756 883 A1**
(43) Date of publication of application: **30.12.2020**
(21) Application number: 18893930.0
(22) Date of filing: 19.12.2018
(51) Int. Cl.: B32B 27/08, B32B 27/32, B32B 27/34, B32B 27/36, B32B 27/38, B32B 27/40

(54) **THIN FILM MATERIAL FOR THERMOSETTING RESIN MOLDING AND USE THEREOF**

(30) Priority: 27.12.2017 CN 201711443440; 25.04.2018 CN 201810376967; 17.10.2018 CN 201811207089
(71) Applicant: Toray Advanced Materials Research Laboratories (China) Co., Ltd., Shanghai 200241 (CN)
(72) Inventor: GUI, Zongyan, Shanghai 200241 (CN); SU, Haihui, Shanghai 200241 (CN); ZHAO, Tianxin, Shanghai 200241 (CN); JIANG, Xinnan, Shanghai 200241 (CN); ARAI, Takashi, Shanghai 200241 (CN); ZHENG, Miao, Shanghai 200241 (CN); OSADA, Shunichi, Shanghai 200241 (CN)
(74) Representative: Cohausz & Florack
(86) International application number: PCT/CN2018/122071
(87) International publication number: WO 2019/128802

(57) **Abstract**

The present invention provides a film material for thermosetting resin molding, comprising at least a first layer and a second layer, wherein there is an interface with a peeling strength of 0.02 to 30 N/cm between the first layer and the second layer at 23°C. The film material for thermosetting resin molding of the present invention has the characteristics of ease of operation, ease of removal, no damage to the dimensional accuracy of the surface of the mold, transfer of the functional layer of the film material to the surface of the thermosetting resin after molding of the thermosetting resin, and imparting functionality to the molded article, thereby overcoming the problems of volatilization of an organic solvent resulting from use of a liquid release agent, generation of dust resulting from subsequent surface polishing of the molded article, high difficulty of the polishing technique, and difficulty in assurance of the design accuracy after the mold is used for many times. In particular, the presence of modification in the second layer on the surface of the molded resin after mold releasing eliminates the needs for surface polishing and primer coating steps, and can ensure the adhesion of the topcoat while reducing the number of process steps and saving working hours.

## Description

### TECHNICAL FIELD

The present invention belongs to the field of polymer materials and relates to a film material for thermosetting resin molding.

### BACKGROUND OF THE INVENTION

Thermosetting resin refers to a type of resin that undergoes a chemical reaction and is cured to form a cross-linked network structure under certain conditions such as temperature, pressure or ultraviolet irradiation. Thermosetting resin is closely related to human's production activities and lives. It can be processed into various shapes according to the design and the need of use. For example, epoxy resin can be used in sheet materials of various shapes, such as automobile interiors, brackets, and shells on the inner side and outer side of vehicle doors.

As one of polymer materials, thermosetting resin is generally difficult to meet the requirement for ultra-high mechanical strength. Therefore, it is necessary to use a method of complexing with an inorganic material, which not only maintains the characteristics of lightweight and easy molding, but also ensures the mechanical properties of the material. The most common method is complexing with glass fiber or carbon fiber, which can increase the impact resistance of the material.

Both thermosetting resin and a composite thereof can be processed by a common vacuum infusion molding process comprising steps of: vacuum infusing raw materials such as thermosetting resin and a curing agent into a predetermined mold, heating, curing, molding, and then removing the mold. In order to guarantee the dimensional accuracy of the molded article, there are certain requirements on the properties of the resin, the surface condition of the mold, and the processing conditions during the specific implementation process.

As one of large molded articles, wind turbine blades generally have a relatively complex structure and have high requirement on mechanical properties. Moreover, with technological innovation, large-scale blades have become an inevitable trend, which comes up with higher requirements on the shape and dimensional accuracy of the blades. The molding process of the blades basically uses the above vacuum infusion molding, and it involves the technical difficulties below: 1) how to efficiently remove the mold while maintaining the dimensional accuracy after the mold is used repeatedly; and 2) how to efficiently treat the surface of the blades while avoiding generation of dust and solvents during the subsequent coating process.

As for the above problem 1), the mold is usually removed by coating a release agent on the inner surface of the mold in the prior art. After volatilization of the organic solvent, a release agent layer can be formed on the inner surface of the mold, such that the cured thermosetting resin can be easily separated from the mold. However, after being used repeatedly for 3-4 times, a part of the release agent layer can adhere to the surface of the thermosetting resin molded article. Therefore, the missing part of the release agent layer needs to be repaired. Multiple repairs can cause wear and tear to the surface of the mold, resulting in a decrease in the regularity of the surface of the molded blade. Therefore, subsequent trimming is necessary to the shape of the blade, which increases working hours. The wear of the inner surface of the mold can also significantly shorten the service life of the mold. In order to solve the above problem, one of the prior art is a tape that can replace the liquid release coating, wherein the substrate material is a glass fiber cloth coated with polytetrafluoroethylene, and the side opposite to the polytetrafluoroethylene side is coated with silica gel. The tape can be attached to the inner surface of the mold and can be used repeatedly. It can be used for operations such as edge sealing and caulking in the blade manufacturing process. However, due to poor fracture elongation of the glass fiber, the tape is only suitable for part of a molded article or a location with a small curvature currently, which severely limits the practical application of such a tape. Chinese Patent Application Publication No. CN106068550A (Application No. CN201580012256.7) provides a release film that can be easily separated from the mold after molding. The use of this film can protect the inner surface of the mold to a certain extent and reduce the wear of the inner surface of the mold. However, this film is not provided with a coating layer. After molding of thermosetting resin, the surface of the molded article needs to be polished and coated, which cannot shorten the working hours. Moreover, polishing and coating can result in generation of a large amount of dust and solvents, which are detrimental to the operators' health.

As for the above problem 2), the preliminary treatments (trimming of the blade shape, roughening of the blade surface, primer coating) for the subsequent coating process in the prior art are generally completed manually; therefore, the accuracy is difficult to guarantee, and the polishing efficiency is relatively low. In addition, the large amount of dust generated by polishing and the large amount of organic solvents generated by the primer coating can be detrimental to the operators' health. In order to solve the above problem, one of the prior art is a robotic polishing production line. Although the polishing efficiency can be improved to a certain extent, this technology still cannot overcome the shortcoming of generation of large amounts of dust and organic solvents. As a prior art, Chinese Patent Application Publication No. CN101905622A (Application No. CN200910052388.9) provides a film having transferable coating layers, comprising a bearing layer, a release layer, a printing layer, a coating layer and an adhesive layer. By using this film, the printing layer, coating layer and adhesive layer can be transferred to the surface of a wall for decoration. The condition of using this film is different from that of thermosetting resin molding, and cannot meet the high temperature requirement during thermosetting resin molding. The epoxy resin in the decorative layer cannot achieve the binding force as needed by the surface coating of wind turbine blades, and therefore cannot be used in the thermosetting resin molding process. Additionally, Chinese Patent Application Publication No. CN101631674A (CN200880007651.6) provides a film for transfer printing decorative sheets, comprising a base material membrane, a release layer, a peeling layer, a pattern layer, an adhesive layer, a transfer printing layer and a transfer printing decorative sheet. After molding and mold releasing processes, the base material membrane is peeled off, and the transfer printing layer such as the decorative layer can be retained on the surface of the resin molded article. However, the injection molding process of thermoplastic resin using this film is greatly different from the molding process of thermosetting resin. Under conditions of the thermosetting resin molding process, the transfer printing layer either cannot be transferred to the surface of the thermosetting resin, or falls off from the base material membrane before molding, and therefore cannot be laid on the mold. Thus, such a film for transfer printing decorative sheets cannot be applied to the thermosetting resin molding process.

### SUMMARY OF THE INVENTION

The present invention provides a film material for thermosetting resin molding, especially for wind turbine blade molding, which has the characteristics of ease of operation, ease of removal, no damage to the dimensional accuracy of the surface of the mold, transfer of the functional layer of the film material to the surface of the thermosetting resin after molding of the thermosetting resin, and imparting functionality to the molded article, thereby overcoming the problems of volatilization of an organic solvent resulting from use of a liquid release agent, generation of dust resulting from subsequent surface polishing of the molded article, high difficulty of the polishing technique, and difficulty in assurance of the design accuracy after the mold is used for many times. In particular, the presence of modification in the functional layer (*i.e.,* the second layer as described hereinafter) on the surface of the resin as a primer after mold releasing can eliminate treatment for surface roughness and use of a primer, and can ensure sufficient adhesion between the topcoat and the thermosetting resin while reducing the number of process steps and saving working hours.

Specifically, the present invention provides a film material for thermosetting resin molding, wherein the film comprises at least a first layer and a second layer, and there is an interface with a peeling strength of 0.02 to 30 N/cm between the first layer and the second layer at 23°C.

The main function of the first layer is to provide the film material for thermosetting resin molding with a sufficient mechanical strength, operability and workability, and it is a substrate material of the film material for thermosetting resin molding.

Considering that the second layer can be completely or partially detached from the film material for thermosetting resin molding and transferred to the thermosetting resin molded article, it is preferable that there is an interface with a peeling strength of 0.02 to 30 N/cm between the second layer and the first layer at 23°C. If the peeling strength at 23°C is greater than 30 N/cm, the second layer cannot be transferred to the thermosetting resin; and if it is less than 0.02 N/cm, the second layer cannot be stably attached to the surface of the first layer.

Further, preferably at 23°C, there is an interface with a peeling strength of 0.1-15 N/cm between the second layer and the first layer.

Further, the first layer comprises one or more of polyester resin, polyurethane resin, polycarbonate resin, polyolefin resin, acrylic resin, polyimide resin, polyamide resin, aramid resin, or fluororesin.

The polyester resin refers to a heterochain polymer with an ester bond in the backbone. Examples of the polyester resin can include chemical structures such as polyethylene terephthalate, polybutylene terephthalate, polycyclohexanedimethanol terephthalate, polyethylene trimellitate, polybutylene trimesate, ethyl p-hydroxybenzoate, polyneopentylene isophthalate, polylactic acid, polybutylene adipate terephthalate, polybutylene succinate, polybutylene adipate succinate, polycaprolactone, and polybutyrolactone, or copolymers formed from the above chemical structures and other chemical structures.

The polyurethane resin refers to a polymer compound with a urethane bond in the backbone. Generally, a polyurethane resin can be prepared from a reaction of a polyol with an isocyanate. Examples of the polyol can include chemical structures containing multiple hydroxyl groups, such as ethylene glycol, diethylene glycol, 1,2-propanediol, dipropylene glycol, 1,4-butanediol, neopentyl glycol, 1,6-hexanediol, 2-methyl-1,3-propanediol, 3-methyl-1,5-pentanediol, dihydroxy polyoxypropyl ether, trihydroxy polyoxypropyl ether, tetrahydroxypropyl ethylene diamine, or dihydroxy polytetrahydrofuran propyl ether oxide. Examples of the isocyanate can include aromatic diisocyanates such as toluene diisocyanate, xylylene diisocyanate, methylene diphenyl diisocyanate, phenylene diisocyanate, naphthalene diisocyanate, and tolidine diisocyanate; aliphatic diisocyanates containing an aromatic ring such as α,α,α',α'-tetramethylxylylene diisocyanate; aliphatic diisocyanates such as methylene diisocyanate, propylene diisocyanate, lysine diisocyanate, trimethylhexamethylene diisocyanate, and hexamethylene diisocyanate; and alicyclic diisocyanates such as cyclohexane diisocyanate, methylcyclohexane diisocyanate, isophorone diisocyanate, dicyclohexylmethane diisocyanate, and isopropylene dicyclohexyl diisocyanate. These substances can be used alone or in combination.

The polycarbonate resin refers to a polymer resin containing a carbonate bond in the backbone. A polycarbonate resin can be synthesized by transesterification of a carbonic acid diester or by the phosgene method. Examples of the carbonic acid diester can include diphenyl carbonate, substituted diphenyl carbonate represented by dibenzyl carbonate, dimethyl carbonate, or di-tert-butyl carbonate. Such carbonic acid diesters can be used alone or in combination. Specific examples of the polycarbonate resin can include chemical structures such as bisphenol A polycarbonate, chlorinated polycarbonate, and allyl diethylene glycol carbonate, or copolymers formed from the above chemical structures and other chemical structures.

The polyolefin resin refers to a resin prepared by polymerization or copolymerization of one or more olefins. Examples of the olefins can include ethylene, propylene, butene, pentene or norbornene. Specific examples of the polyolefin resin can include chemical structures such as high-density polyethylene, low-density polyethylene, isotactic polypropylene, syndiotactic polypropylene, polynorbornene, poly-1-butene, poly-4-methyl-1-pentene, and ethylene-vinyl acetate copolymer, or copolymers formed from the above chemical structures and other chemical structures.

The acrylic resin is a copolymer synthesized from a vinyl monomer such as acrylate, methacrylate or styrene as the main monomer. Examples of the monomer can include chemical structures such as methyl methacrylate, ethyl methacrylate, styrene, acrylonitrile, ethyl acrylate, n-butyl acrylate, lauryl acrylate, 2-ethylhexyl acrylate, lauryl methacrylate, n-octyl methacrylate, 2-hydroxyethyl acrylate, 2-hydroxypropyl acrylate, 2-hydroxyethyl methacrylate, 2-hydroxypropyl methacrylate, glycidyl methacrylate, acrylamide, N-hydroxymethyl acrylamide, N-butoxymethyl (meth) acrylamide, diacetone acrylamide, ethyl acetoacetate methacrylate, divinylbenzene, vinyl trimethoxy silane, vinyl triethoxy silane, vinyl triisopropoxy silane, γ-methacryloxypropyl trimethoxy silane, styrene sulfonic acid, and sodium vinyl sulfonate, or copolymers formed from the above chemical structures and other chemical structures.

The polyimide resin is a polymer containing an imide bond in the backbone. Examples of the polyimide resin can include polycondensed aromatic polyimide and addition polymerized polyimide. Specific examples can include chemical structures such as polypyromellitimide, bismaleic polyimide, PMR polyimide, and acetylene-terminated polyimide, or copolymers formed from the above chemical structures and other chemical structures.

The polyamide resin, also known as nylon, can include nylon 6, nylon 66, nylon 11, nylon 12, nylon 610, nylon 612, nylon 46, nylon 1010, or the like.

The aramid resin, *i.e.,* aromatic polyamide, can include para-aramid, meta-aramid, or a copolymer thereof.

The fluororesin refer to a polymer containing a fluorine atom in the molecular structure. Examples of the fluororesin can include chemical structures such as perfluorinated alkyl vinyl ether copolymers, polyperfluorinated isopropylene, ethylene-tetrafluoroethylene copolymers, polyvinylidene fluoride, polytrifluorochloroethylene, or copolymers formed from the above chemical structures and other chemical structures.

Specifically, the first layer can comprise one or more of polyethylene terephthalate, thermoplastic polyurethane, bisphenol A polycarbonate, polytetrafluoroethylene, polyvinylidene fluoride, fluorinated ethylene propylene copolymer, ethylene-tetrafluoroethylene copolymer, polyethylene, polypropylene, polypropylene/polyethylene copolymer, or a blend thereof.

There is no special limitation to the thickness of the first layer. From the viewpoint of ease of laying, the thickness can be 10 to 200 µm, preferably 20 to 100 µm.

The first layer can be prepared by a well-known method, such as rolling process, tape casting, blow molding or stretching. The rolling process refers to a molding process in which a thermoplastic is passed through a series of heated rollers and continuously shaped into films or sheets. The tape casting refers to a process in which a resin is molten and plasticized in an extruder, extruded through a slit die orifice, such that the melt is tightly attached to the cooling roller, and then subjected to procedures including stretching, trimming, and winding to form a film. The blow molding refers to a process in which a resin is inflated in a closed mold by means of fluid pressure to prepare the resin into a hollow product. The stretching process refers to a film-forming process in which a film is stretched longitudinally or transversely, or both longitudinally and transversely, at a temperature lower than the melting point of the film material and higher than the glass transition temperature of the film material, and then properly cooled in a tensioned state.

The second layer is a functional layer. During the thermosetting resin molding process, the second layer can be completely or partially detached from the film material for thermosetting resin molding and transferred to the thermosetting resin molded article, thereby playing a beneficial effect. The beneficial effect can include, for example, providing heat resistance, light resistance, UV resistance, flame resistance, corrosion resistance, solvent resistance, water resistance, aging resistance, fuel oil resistance, hydraulic oil resistance, abrasion resistance, impact resistance or decorative effects. If necessary, an additional adjacent layer can be added to the outside of the transferred second layer. In this case, the second layer can also serve to bond the thermosetting resin to the additional adjacent layer.

Further, considering that the second layer needs to have certain functionality, the second layer preferably comprises one or more of polyurethane resin, epoxy resin, unsaturated polyester resin, acrylic resin, or fluororesin.

Specifically, the substance that can be contained in the second layer can include the following substances. Examples of polyurethane resins can include cured products of the following polymers or coatings: WU210A/B series and WU233A/B series produced by Shanghai Mega Coatings Co., Ltd.; LT2552/LW7260 series produced by PPG (Shanghai) Co., Ltd.; and 881-FYDM-A/B series produced by Hongzetiancheng Technology & Trade Co., Ltd. Examples of epoxy resins can include cured products of the following polymers or coatings: LP149 series produced by PPG (Shanghai) Co., Ltd.; 670HS-A/B series produced by AkzoNobel; and EM400-A/B series produced by Lions Coatings Co., Ltd. Examples of unsaturated polyester resins can include cured products of the following polymers or coatings: 191 series produced by Sanhua Chemical Coating Co., Ltd.; and TS-817 series produced by Tsingyi Chemical Materials Co., Ltd. Examples of acrylic resins can include cured products of the following polymers or coatings: FNUH-606 series produced by Renai Technology Development Co., Ltd.; and E0512 series produced by Yoshida Chemical Co., Ltd. Examples of fluororesins can include cured products of the following polymers or coatings: YQ-F-011-1 series produced by Shandong Yingqiang New Material Technology Co., Ltd.; and HC-0210F-A/B series produced by Renai Technology Development Co., Ltd.

Further, in order to achieve the effects that the second layer is completely or partially detached from the film material for thermosetting resin molding and transferred to the thermosetting resin molded article during the thermosetting resin molding process, and the binding force of the second layer to the thermosetting resin (such as epoxy resin) is sufficient, the film material for thermosetting resin molding has the following properties: the epoxy resin binding force of the second layer is 6 MPa or more at 23°C. The epoxy resin binding force is tested by a method comprising the following steps: after 8 layers of glass fiber (Taishan glass fiber, triaxial, 1200 g/m²) and auxiliary materials such as mold release cloth, porous film, guide net, and vacuum bag film are laid on the second layer of the film material for thermosetting resin molding of the present invention, vacuum infusion is performed with a mixture of Airstone series 760E and 766H epoxy resins produced by Dow Chemical Co. in a mass ratio of 100:32, and curing is conducted at 80°C and 0.1 MPa for 2 h to obtain an epoxy resin molded article with a thickness of 6 mm. When the film material for thermosetting resin molding of the present invention is removed at 23°C, the second layer is transferred from the film material for thermosetting resin molding to the surface of the epoxy resin molded article. An adhesion tester is used to test the adhesion of the second layer to obtain the epoxy resin binding force of the second layer. If the epoxy resin binding force of the second layer is lower than 6 MPa, the second layer can be easily peeled off from the surface of the thermosetting resin and has insufficient durability.

In order to improve the epoxy resin binding force of the second layer, the second layer can further comprise one or more of compounds containing blocked isocyanate group, epoxy group, hydroxyl group, carboxyl group, anhydride group or amine group. One or more of the compounds containing blocked isocyanate group, epoxy group, hydroxyl group, carboxyl group, anhydride group or amine group added to the second layer react with the chemical components, thermosetting resin and/or curing agent in the second layer, such that a chemical bond linkage is formed between the second layer and the thermosetting resin, thereby achieving the purposes of improving the epoxy resin binding force of the second layer and improving the binding force of the second layer to the thermosetting resin.

The blocked isocyanate refers to a compound generated from a reaction of a compound containing an isocyanate group with a blocking agent, which is stable at room temperature but can be decomposed into isocyanate at an elevated temperature.

Specifically, examples of the compound containing an isocyanate group can include: aromatic diisocyanates such as toluene diisocyanate, xylylene diisocyanate, methylene diphenyl diisocyanate, phenylene diisocyanate, naphthalene diisocyanate, or tolidine diisocyanate; aliphatic diisocyanates containing an aromatic ring such as α,α,α',α'-tetramethylxylylene diisocyanate; aliphatic diisocyanates such as methylene diisocyanate, propylene diisocyanate, lysine diisocyanate, trimethylhexamethylene diisocyanate, or hexamethylene diisocyanate; and alicyclic diisocyanates such as cyclohexane diisocyanate, methylcyclohexane diisocyanate, isophorone diisocyanate, dicyclohexylmethane diisocyanate, or isopropylene dicyclohexyl diisocyanate. These substances can be used alone or in combination.

The blocking agent refers to one or more of phenols, pyridinol and corresponding sulfhydryl compounds, alcohols, thiols and other hydroxyl-containing compounds, oximes, amides, cyclic amides and lactams, imidazoles, imidazolines, amidines and related compounds, pyrazoles, triazoles, amines, active methylene compounds, inorganic acids, etc. Specific examples can include phenol, cresol, catechol, methoxyphenol, p-chlorophenol, 2-hydroxypyridine, 3-hydroxyquinoline, 8-hydroxypyridine, n-butanol, dimethylaminoethanol, hydroxyethanol acrylate, 2-trifluoroethanol, triphenyl mercaptan, hexanethiol, dodecylthiol, N-hydroxysuccinamide, N-morpholinoethanol, 2-hydroxymethylpyridine, ethylene glycol monoethyl ether, diethylene glycol monoethyl ether, butanoneoxime, acetanilide, N-methylacetamide, lactam, caprolactam, imidazole, 2-ethyl-4-methylimidazole, cyclic amidine, diimidazoline, pyrimidine, 1,2,4-triazole, N-methylaniline, N-methoxyaniline, diphenylamine, N-phenylnaphthylamine, di-tert-butylamine, diisopropylamine, N-methylhexylamine , dicyclohexylamine, 2,6-dipiperidine, diethyl malonate, ethyl acetoacetate, β-dicarbonyl compound, KHSO₃, NaHSO₃, HCl, HCN, glycolic acid, propyl acetic acid, isopropyl glycolic acid, etc.

Specifically, examples of the blocked isocyanate can include TAKENATE series from Mitsui Chemicals Co., Ltd., HIBLOCK series from Xiamen Akema Chemical Co., Ltd., BL-175 series from Shanghai Yitu Industrial Co., Ltd., GT-5100 series from Jiangyin Getai Chemical Co., Ltd., HR-0325 series from Zhangjiagang Tianyi Chemical Co., Ltd., and Trixene series from Baxenden, UK.

If the second layer comprises a compound containing a blocked isocyanate group, the outer surface of the second layer can be tested at a certain temperature by infrared spectroscopy to detect a change in the content of the isocyanate group. Furthermore, the film material for thermosetting resin molding as described in the present invention preferably satisfies the requirement that the content of the isocyanate group is increased by 5-20% after be heated at 120°C for 10 min as compared to before heating.

Specific examples of the compounds containing epoxy group, hydroxyl group, carboxyl group, anhydride group or amine group can include glycidol, trimellitic anhydride, 3-hydroxypropionic acid, 2-tetrahydrofurfurylamine, L-aspartic acid, β-aminopropionic acid, diethyl tartrate, etc.

Furthermore, in order to allow the second layer to have a good binding force to the thermosetting resin, the outer surface of the second layer preferably has a roughness of higher than 0.5 µm. The outer surface is the surface where the film material contacts the thermosetting resin when the thermosetting resin is molded. If it is lower than this requirement, under the molding process conditions, the second layer may not be transferred from the first layer to the surface of the thermosetting resin, or the second layer can easily fall off from the surface of the thermosetting resin after transfer. Further preferably, the outer surface of the second layer has a roughness of higher than 1 µm.

After the second layer is transferred to the thermosetting resin, an additional layer may need to be arranged on the outside of the second layer. In order to facilitate the arrangement of the additional layer, the inner surface of the second layer further preferably has a roughness of higher than 0.1 µm. The inner surface is opposite to the outer surface of the second layer. Further preferably, the inner surface of the second layer has a roughness of higher than 0.5 µm.

In order to allow the inner surface of the second layer to have a roughness of higher than 0.1 µm, the surface of the layer directly in contact with the inner surface of the second layer can also be roughened. The roughening treatment refers to a surface treatment by which the surface has a larger distance and slight unevenness of peaks and troughs. Specifically, the roughening treatment can includes electroplating, chemical plating, hot dip plating, corona treatment, mechanical roughening, coating, vacuum coating, oxidation treatment, decorative coating, oxidation treatment, solvent treatment, or flame treatment. The roughening of the first layer can be one or more of corona treatment, mechanical roughening, coating, oxidation treatment, solvent treatment, or flame treatment.

The second layer can be prepared by the following method: it is coated on the first layer by spray coating, brush coating, dipping, roller coating, or curtain coating. Spray coating refers to a coating method in which a paint is dispersed into uniform and fine droplets by a spray gun or a disc atomizer with the help of pressure or centrifugal force, and then applied to the surface of the object to be coated. Brush coating refers to a method comprising manually dipping a paint with a brush and applying it to the surface of the object to be coated. Dipping refers to a method comprising immersing a solid powder or shaped solid of a certain shape and size in a soluble compound solution containing an active component, and separating the residual liquid after contacting for a certain period of time such that the active component is attached to the solid in the form of an ion or compound. Roller coating refers to a method in which a wet coating of a certain thickness is formed on a roller, and then part or all of the wet coating is transferred to the workpiece while passing through the roller. Curtain coating refers to a coating method in which a uniform paint curtain formed through a shower head is poured onto the surface of the object to be coated. Specifically, under production conditions, the second layer can be roller coated by a coater equipped with a coating roller such as a comma roller or a slightly concave roller. Under laboratory conditions, a coating tool such as a wet film preparation device and coil bar can be used for coating.

The thickness of the second layer can be set according to the properties such as the viscosity and curing time of the second layer and the process conditions. The thickness of the second layer is preferably 25 to 250 µm, more preferably 30 to 200 µm.

In order to achieve the effect that the surface of the inner thermosetting resin can be observed through the second layer after the second layer is completely or partly transferred from the film material for thermosetting resin molding to the thermosetting resin molded article, the film material for thermosetting resin molding preferably has the following properties: at the above thickness of the second layer, the second layer has a light transmittance of larger than 20%. If the light transmittance is less than 20%, the surface of the inner thermosetting resin cannot be observed due to the too high covering effect of the second layer. The light transmittance refers to the percentage of the luminous flux passing through the second layer relative to the incident luminous flux as measured by an HZ-V3 haze meter from Suga. Further, in order to clearly observe the surface of the inner thermosetting resin through the second layer, the light transmittance is preferably 40% or more.

Further, in order to confirm the transfer effect of the second layer on the surface of the thermosetting resin after molding, the film material for thermosetting resin molding has the following properties: the color difference ΔE between the second layer and the thermosetting resin is 0.5 or more. The color difference specifically refers to the difference in color between the second layer and the thermosetting resin. An NF333 portable colorimeter from Denshoku can be used to measure the color difference ΔE between the second layer and the thermosetting resin molded article that does not use the film material for thermosetting resin molding. When the color difference ΔE between the second layer and the thermosetting resin is less than 0.5, the color of the second layer is too close to that of the thermosetting resin, and it cannot be accurately judged whether the second layer is transferred to the surface of the thermosetting resin.

In order to adjust the color difference between the second layer and the thermosetting resin, the second layer preferably comprises a coloring agent. The coloring agent includes a pigment and dye. The pigment refers to a series of colored fine particle powder substances that are insoluble in media such as water, oil, solvent, and resin, but can be dispersed in various media. It can be one of more of natural mineral pigments, metal oxide pigments, sulfide pigments, sulfate pigments, chromate pigments, molybdate pigments, carbon black pigments, azo pigments, phthalocyanine pigments, heterocyclic pigments, lake pigments, and fluorescent pigments. Specific examples can include cinnabar, red clay, realgar, wollastonite, talc, titanium dioxide, iron oxide, chromium oxide, cadmium yellow, cadmium red, chrome yellow, chrome orange, molybdenum red, pigment carbon black, pigment yellow 93, phthalocyanine blue pigment, quinacridone pigment, Lithol Red pigment, fluorescent yellow YG-51 pigment, or the like. The dye refers to a type of colored organic compound that can be dissolved in water or other media to form a solution or dispersion, thereby coloring a material. It can be one or more of direct dyes, acid dyes, metal complex dyes, vat dyes, sulfur dyes, disperse dyes, reactive dyes, cationic dyes, condensation dyes, oxidation dyes, and solvent dyes. Specific examples can include anthraquinone dyes, azo dyes, indigo blue, thioindigo, nigrosine, phthalocyanine dyes, polymethine dyes, arylmethane dyes, nitro dyes, nitroso dyes, or the like.

Further, in order to better transfer the second layer from the first layer to the thermosetting resin during the molding of the thermosetting resin, at least one surface of the first layer has a surface tension of 40 mN/m or less. In order to further improve the transfer ability of the second layer during molding, at least one surface of the first layer more preferably has a surface tension of 35 mN/m or less. In view of the operability of the film material, at least one surface of the first layer further preferably has a surface tension of 10 mN/m or more.

Further, in order to better transfer the second layer from the first layer to the thermosetting resin during the molding of the thermosetting resin, the film material for thermosetting resin molding further comprises a third layer, and at least one surface of the third layer preferably has a surface tension of 40 mN/m or less. In order to further improve the transfer ability of the second layer during the molding of the thermosetting resin, at least one surface of the third layer more preferably has a surface tension of 35 mN/m or less. In view of the operability of the film material, at least one surface of the third layer further preferably has a surface tension of 10 mN/m or more. The third layer can be arranged between the first layer and the second layer to provide mold releasing performance.

The surface tension of the third layer can be adjusted by a well-known method, for example, by providing one or more of compounds containing silicon and/or fluorine in the third layer. The silicon-containing compound can be an organosilicon polymer, including polysiloxanes such as polyvinyltriisopropoxysilane, polyvinyltrimethoxysilane, polyvinyltriethoxysilane, and polyvinyltripropoxysilane, and derivatives thereof (silicone oil). The fluorine-containing compound can be a fluorine-containing polymer, including polytetrafluoroethylene, ethylene-polytetrafluoroethylene copolymer, fluorine-containing vinyl-modified silicone oil, or the like. The third layer can be prepared by reacting a monomer with a crosslinking agent under the action of a catalyst, and then coating it on the surface of a substrate or directly by a mixing extrusion method.

Further preferably, the first layer is provided with the second layer on one side, and an adhesive layer on the other side. The adhesive layer can adhere to the film material for thermosetting resin molding and the surface of the thermosetting resin molding die, thereby achieving the effect of fixing the film material for thermosetting resin molding on the surface of the mold, and allowing the film for thermosetting resin molding to be peeled off from the surface of the molding die at the end of use, such that there is little or no adhesive layer remaining on the surface of the molding die.

Further, the adhesive layer comprises one or more of natural polymers, polyvinyl alcohol, polyamide resin, polyurethane resin, acrylic resin, polyester resin or silicone resin. Specific examples can include water-based adhesives, such as starches, celluloses, and polyvinyl alcohols; solvent-based adhesives, such as acrylics, and polyurethanes; emulsion-based adhesives, such as polyvinyl acetate emulsions; heat-curable adhesives, such as epoxy resins, silicone resins, and unsaturated polyester resins; UV-curable adhesives, such as acrylates; anaerobically curable adhesives, such as acrylates; moisture-curable adhesives, such as cyanoacrylates, and polyurethanes; polycondensation type adhesives, such as urethanes; free radical polymerization type adhesives, such as acrylates; hot melt adhesives, such as acrylates, polyamide resins, polyester resins; re-wettable adhesives, such as starches; and pressure sensitive adhesives, such as acrylates.

The thickness of the adhesive layer can be set according to the properties such as the viscosity and curing time of the adhesive, and the process conditions. It is recommended that the thickness of the adhesive layer is 1 to 100 µm, preferably 2 to 80 µm.

The adhesive layer can be set by a well-known method, for example, with reference to the setting method as described above for the second layer.

The thermosetting resin preferably comprises one or more of epoxy resin, polyurethane resin, acrylic resin, unsaturated polyester resin, phenolic resin, melamino-formaldehyde resin, or furan resin. Specifically, the raw material of the thermosetting resin includes the following. Examples of the epoxy resins can include Airstone series 760E/766H produced by Dow Chemical Co., 2511-1A/2511-1BC series produced by Shangwei (Shanghai) Fine Chemical Co., Ltd., R-802 Series produced by Showa Polymer, etc. Examples of the polyurethane resins can include 78BD075/44CP20 series from Covestro Polymers (China) Co., Ltd. Examples of the acrylic resin can include 10031/7662 series from Beijing Junfengyuan Chemical Co., Ltd. Examples of the vinyl ester resin can include MFE-VARTM-200 series from Sino Polymer Co., Ltd., and AROPOL G300 series from Ashland, US. Examples of the phenolic resin can include HK2506 series from Shandong Baiqian Chemical Co., Ltd., and 2124 series from Wuxi Boruiyu Chemical Technology Co., Ltd. Examples of the furan resin can include NPEL128 series from Wuxi Changgan Chemical Co., Ltd.

The thermosetting resin can further comprise an inorganic substance to enhance its mechanical properties. The inorganic substance includes, but is not limited to, one or more of fibrous inorganic substances such as glass fiber, asbestos fiber, carbon fiber, graphite fiber, metal fiber, potassium titanate whisker, aluminum borate whisker, magnesium whisker, silicon whisker, wollastonite, sepiolite, asbestos, slag fiber, xonotlite, ellestadite, gypsum fiber, silica fiber, silica/alumina fiber, zirconia fiber, boron nitride fiber, silicon nitride fiber or boron fiber, or one or more of flake or granular inorganic substances such as glass flakes, non-swelling mica, swelling mica, graphite, metal foil, ceramic beads, talc, clay, mica, sericite, zeolite, bentonite, vermiculite, montmorillonite, dolomite, kaolin, micronized silicic acid, feldspar powder, potassium titanate, fine hollow glass balls, calcium carbonate, magnesium carbonate, calcium sulfate, titanium dioxide, silica, gypsum, novaculite, dawsonite, or carclazyte.

The molding process of thermosetting resin includes hand lay-up molding, injection molding, vacuum bag compression molding, extrusion molding, pressure bag molding, fiber winding, resin transfer molding, vacuum-assisted resin injection molding, continuous sheet molding, pultrusion molding, centrifugal casting molding, lamination or roll molding, sandwich structure molding, compression forming, impact molding, injection molding, or the like. Specifically, the thermosetting resin molding of the present invention can be any one or more of hand lay-up molding, fiber winding molding, resin transfer molding, vacuum-assisted resin injection molding, pultrusion molding, compression molding, or prepreg laying.

The film material for thermosetting resin molding of the present invention can be used in the molding of various thermosetting resins, such as the molding of wind turbine blades, vehicles such as automobiles, trains and airplanes, electronic components, molded decorative panels, etc., so as to achieve beneficial effects such as efficient production, high dimensional accuracy, low pollution on the resin surface, and environmentally friendly production process.

The present invention also provides use of the above film material for thermosetting resin molding in the fields of vehicles such as automobiles, trains and airplanes, electronic components, molded decorative panels, *etc.,* especially in the molding of a wind turbine blade.

The present invention also provides a product, especially a wind turbine blade, manufactured from the above film material for thermosetting resin molding. When used in the vacuum molding process of wind turbine blades, the second layer can be transferred to the surface of the blade (mainly composed of epoxy resin or polyurethane resin) to act as a primer or both a primer and a topcoat, thereby eliminating the process of polishing the blade surface before primer coating and the process of primer (and topcoat) coating in the existing processes, simplifying the process flow, shortening the process time, saving labor, and reducing VOC emission. After the second layer is transferred to the surface of the blade, the surface of the inner thermosetting resin can be directly observed through the second layer, which is beneficial to detection and direct observation of the defects and locations on the surface of the thermosetting resin for accurate repairing process. Additionally, the film material for thermosetting resin molding of the present invention can be directly separated from the blade mold, with little or no residual adhesive, and without the need of cleaning of the mold, thereby reducing wear of the mold and extending the service life of the mold.

### DETAILED DESCRIPTION OF THE INVENTION

The present invention is described in more detail through the following Examples; however, the Examples do not constitute a limitation to the present invention.

The test methods used in the Examples and Comparative Example are as follows. All tests were performed at 23°C unless the test temperature is clearly specified.

### 1. Thickness:

A thickness gauge was used to measure the thickness. The thickness of a sample was measured at 3 different positions, and the arithmetic average of the 3 thickness values was taken as the thickness of the sample.

### 2. Peeling strength of the film material for thermosetting resin molding:

The peeling strength of the film material for thermosetting resin molding refers to the peeling strength of the first layer from the second layer, in N/cm (peeling strength). The second layer was reinforced with TESA7475 test tape, the sample size was 150 mm × 10 mm, a stretching machine was used to perform 180° peeling, and the peeling speed was 200 mm/min. The number of test samples was 3, and the arithmetic average of the 3 test results was taken as the peeling strength result.

### 3. Light transmittance:

Light transmittance refers to the percentage of the luminous flux passing through the second layer relative to the incident luminous flux. The second layer was completely peeled off from the first layer, and the light transmittance of the second layer was measured using an HZ-V3 haze meter from Suga and a D65 light source. The number of test samples was 3, and the arithmetic average of the 3 test results was taken as the light transmittance result.

### 4. Transferability of the second layer:

First, an epoxy resin molded article was prepared by a method comprising the steps of: laying the film material for thermosetting resin molding on the molding die, arranging auxiliary materials according to the vacuum molding steps of wind turbine blades, performing vacuum infusion with a mixture of Airstone series 760E and 766H epoxy resins produced by Dow Chemical Co. in a mass ratio of 100:32, vacuum molding at 80°C and 0.1 MPa for 2 h, cooling down to 23°C, and removing the mold to obtain an epoxy resin molded article with a thickness of 6 mm.

Then, the surface of the transferred film material for thermosetting resin molding (the surface bonded to the thermosetting resin during molding) and the outer surface of the thermosetting resin molded article (the surface bonded to the film material for thermosetting resin molding during molding) were measured by infrared spectroscopy, respectively. The following judgments were made based on the measurement results of the second layer component on both surfaces:
○: Excellent transferability; the second layer component was only detected on the outer surface of the thermosetting resin molded article;
Δ: Intermediate transferability; the second layer component was detected on both surfaces;
×: Poor transferability; the second layer component was only detected on the surface of the film material for thermosetting resin molding.

### 5. Color difference:

Color difference refers to the difference in color between the second layer of the film material for thermosetting resin molding and the thermosetting resin. The second layer and a thermosetting resin molded article that did not use the film material for thermosetting resin molding were placed on a black board of the same specification, respectively. A reference value was obtained by measuring the second layer as a reference sample for color difference measurement using an NF333 portable colorimeter from Denshoku which was set at the color difference testing mode. Then, the thermosetting resin molded article that did not use the film material for thermosetting resin molding was measured. The color difference ΔE was obtained from the results shown by the instrument. The number of test samples was 3, and the arithmetic average of the 3 test results was taken as the color difference ΔE.

### 6. Epoxy resin binding force of the second layer:

The epoxy resin binding force of the second layer was expressed in MPa. The molded samples were prepared by a method comprising the following steps: after 8 layers of glass fiber (Taishan glass fiber, triaxial, 1200 g/m²) and auxiliary materials such as mold release cloth, porous film, guide net, and vacuum bag film were laid on the second layer of the film material for thermosetting resin molding of the present invention, vacuum infusion was performed with a mixture of Airstone series 760E and 766H epoxy resins produced by Dow Chemical Co. in a mass ratio of 100:32, and curing was conducted at 80°C and 0.1 MPa for 2 h to obtain an epoxy resin molded article with a thickness of 6 mm. When the film material for thermosetting resin molding of the present invention was removed at 23°C, the second layer was transferred from the film material for thermosetting resin molding to the surface of the epoxy resin molded article.

A flat position on the outer surface of the molded article was selected as the testing position. The testing position was slightly polished with 120-grit sandpaper until it is lustreless. The measuring instrument was an XH-M portable adhesion tester manufactured by Beijing Samyon Instruments Co., Ltd. The 20 mm test spindle provided with the tester was bonded to the testing position with MC1500 adhesive, and it was tested after 2 hours. The binding force was measured at 3 different positions, and the arithmetic average of the 3 results was taken as the result of the epoxy resin binding force of the second layer of the sample.

### 7. Determination of increase in content of isocyanate group:

A FTIR-ATR testing was conducted on the surface of the second layer of the film material for thermosetting resin molding using an iZ10 Fourier Infrared (FT-IR) spectrometer from Thermo Fisher Scientific (China) Co., Ltd. Then, the same film material for thermosetting resin molding was heated at 120°C for 10 min, and the second FTIR-ATR testing was performed on the surface of the second layer. After the alkyl stretching vibration regions in the test image before and after the heat treatment were highly normalized, the heights of the -NCO regions were compared, to obtain an increase in the proportion of the isocyanate group.

### 8. Surface roughness:

A stylus type roughness profile tester (TR200, Xiamen Jinheyuan Technology Co., Ltd.) was used for testing. The testing speed was set at 0.5 mm/s. The surface roughness was measured at 3 different positions, and the arithmetic average of the 3 test results was taken as the surface roughness result. The outer surface roughness of the second layer was obtained by testing the outer surface of the second layer. The inner surface roughness of the second layer was obtained by testing the surface of the first layer before the second layer was applied (or the surface to be provided with the second layer).

### 9. Surface tension measurement:

According to ASTM D2578-99a, a dyne pen or dyne fluid meeting the standard specification was used for testing.

### 10. Element determination:

Using Hitachi S-3400N scanning electron microscope, and EDX Model Apollo X, the elements contained in the third layer of the film material for thermosetting resin molding were measured.

The raw materials used in the Examples and Comparative Example were as follows:
<The first layer (including the case with the third layer)>
   A1: Polyethylene terephthalate release film Lumirror® XD-55YR produced by Toray Co. Ltd., with a thickness of 50 µm, a longitudinal tensile strength of 153 MPa, and a breaking elongation of 38.6%. One side was a release surface. Upon silicon release treatment, an EDX element analysis using a scanning electron microscope showed the presence of silicon in the release surface. The surface tension of the release surface was 20 mN/m; and the surface tension of the non-release surface was 30 mN/m. The roughness of both surfaces was 0.1 µm. This film was the first layer with a release surface (i.e., the first layer with a third layer).
   A2: Polyolefin film Toreteck® 7H55G produced by Toray Co. Ltd., with a thickness of 30 µm. One side was a self-adhesive surface with a surface tension of 20 mN/m and a roughness of 0.1 µm; and the non-self-adhesive surface had a surface tension of 25 mN/m and a roughness of 0.2 µm.
   A3: Biaxially oriented polypropylene film Torayfan® 50-2500A produced by Toray Co., Ltd., with a thickness of 50 µm. Both surfaces had a surface tension of 18 mN/m, and a roughness of 0.1 µm.
<The second layer>
   B1: WU233A/B produced by Shanghai Mega Coating Co., Ltd., in which WU233A was the main agent, with a solid content of 97%, and a main component of a polyurethane compound; and WU233B was a curing agent, with a solid content of 99%, and a main component of a hexamethylene diisocyanate trimer. It was ready for use after WU233A and WU233B were mixed at a mass ratio of 3:2. The curing condition for the coating was 23°C for 24 h.
   B2: LT255/LW7260 produced by PPG (Shanghai) Co., Ltd., in which LT255 was the main agent, with a solid content of 72%, and a main component of a polyester polyol compound; and LW7260 was a curing agent, with a solid content of 34%, and a main component of a hexamethylene diisocyanate trimer. It was ready for use after LT255 and LW7260 were mixed at a mass ratio of 4:1. The drying condition was 100°C for 4 min, and the curing condition was 23°C for 24 h.
   B3: JH-8152/3390 produced by Junhe Chemical (Shanghai) Co., Ltd., in which JH-8152 was the main agent, with a solid content of 95%, and a main component of a polyaspartic acid ester compound; and 3390 was a curing agent, with a solid content of 98%, and a main component of a hexamethylene diisocyanate trimer. It was ready for use after JH-8152 and 3390 were mixed at a mass ratio of 4:5. The drying condition was 100°C for 4 min, and the curing condition was 23°C for 24 h.
   B4: the same as B1, except that 0.5% XB-G282 was added as a filler to WU233A. XB-G282 is TAKENATE series blocked isocyanate produced by Mitsui Chemicals Co., Ltd., specifically, blocked hydrogenated phenylmethane diisocyanate, and the blocking agent is an active methylene compound.
   B5: the same as B4, except that XB-G282 was replaced with glycidol produced by Sigma-Aldrich.
   B6: the same as B4, except that XB-G282 was replaced with trimellitic anhydride produced by Aladdin Reagent (Shanghai) Co., Ltd.
   B7: the same as B4, except that XB-G282 was replaced with 3-hydroxypropionic acid produced by Aladdin Reagent (Shanghai) Co., Ltd.
   B8: the same as B4, except that XB-G282 was replaced with L-aspartic acid produced by Aladdin Reagent (Shanghai) Co., Ltd.
   B9: the same as B4, except that the amount of XB-G282 was changed to 2 parts by weight.
   B10: the same as B4, except that the amount of XB-G282 was changed to 0.5 parts by weight, and then 0.5 parts by weight of glycidol was added.
   B11: the same as B1, except that 1% TiO₂ was added as a filler to WU233A.
   B12: the same as B1, except that 0.5% iron blue pigment was added as filler to WU233A.
<Adhesive layer>
   C1: Y-1210/Y-101 produced by Anzuo Chemical Co., Ltd., which was an acrylate adhesive comprising Y-1210 as the main agent with a solid content of 36%; and Y-101 as a curing agent with a solid content of 75%. The mass ratio of Y-1210 to Y-101 was 100:0.56. The viscosity was 10000 CPS at 25°C, the drying condition was 100°C for 2 min, and the curing condition was 40°C for 24 h.
   C2: UPSA-933A/B produced by Kanglibang Technology Co., Ltd., which was a polyurethane adhesive comprising UPSA-933A as the main agent with a solid content of 65%; and UPSA-933B as a curing agent with a solid content of 70%. The mass ratio was 100:6, the drying condition was 100°C for 3 min, and the curing condition was 80°C for 24 h.

### Examples 1-12

According to the composition shown in Table 1, a stock solution of the second layer was coated on one side of the first layer using a wet film preparation device, and then cured under the curing conditions of the second layer used, to obtain the second layer with a thickness of 100 µm. In Examples 1-3, the second layer was arranged on the non-release surface of Al; in Examples 4-6, the second layer was arranged on the release surface of Al; in Examples 7-9, the second layer was arranged on the self-adhesive surface of A2; and in Examples 10-12, the second layer was arranged on any side of A3.

Various performance measurements were performed on the obtained samples, and the results are listed in Table 1.

### Examples 13-15

According to the composition shown in Table 2, a stock solution of the second layer was coated on the self-adhesive surface of A2 using a wet film preparation device, and then cured under the curing conditions of the second layer used, to obtain the second layer with a thickness of 100 µm.

Various performance measurements were performed on the obtained samples, and the results are listed in Table 2.

### Examples 16-22

According to the composition shown in Table 3, a stock solution of the second layer was coated on the self-adhesive surface of A2 using a wet film preparation device, and then cured under the curing conditions of the second layer used, to obtain the second layer with a thickness of 100 µm.

Various performance measurements were performed on the obtained samples, and the results are listed in Table 3.

### Examples 23-24

According to the composition shown in Table 4, a stock solution of the adhesive layer was coated on the non-self-adhesive surface of A2 using a wet film preparation device, and then cured under the curing conditions of the adhesive layer used, to obtain the adhesive layer with a thickness of 5 µm.

Then, according to the composition shown in Table 4, a stock solution of the second layer was coated on the other surface of the first layer using a wet film preparation device, and then cured under the curing conditions of the second layer used, to obtain the second layer with a thickness of 100 µm.

Various performance measurements were performed on the obtained samples, and the results are listed in Table 4.

### Examples 25-27

The release surface of Al, the self-adhesive surface of A2, and either surface of A3 were roughened, such that the roughened surface of A1 had a roughness of 3 µm, the roughened surface of A2 had a roughness of 0.6 µm, and the roughened surface of A3 had a roughness of 1 µm.

According to the composition shown in Table 5, a stock solution of the adhesive layer was coated on the untreated surface of the first layer using a wet film preparation device, and then cured under the curing conditions of the adhesive layer used, to obtain the adhesive layer with a thickness of 5 µm.

Then, according to the composition shown in Table 5, a stock solution of the second layer was coated on the other side of the first layer using a wet film preparation device, and then cured under the curing conditions of the second layer used, to obtain the second layer with a thickness of 100 µm. Various performance measurements were performed on the obtained samples, and the results are listed in Table 5.

### Examples 28-29

According to the composition shown in Table 6, a stock solution of the adhesive layer was coated on the non-self-adhesive surface of A2 using a wet film preparation device, and then cured under the curing conditions of the adhesive layer used, to obtain the adhesive layer with a thickness of 5 µm.

According to the composition shown in Table 6, a stock solution of the second layer was coated on the other side of A2 using a wet film preparation device, and then cured under the curing conditions of the second layer used, to obtain the second layer B1 with a thickness of 100 µm. The outer surface of the second layer B1 was roughened, such that the roughened surface of B1 had a roughness of 0.6 µm (Example 28) and 2 µm (Example 29), respectively.

Various performance measurements were performed on the obtained samples, and the results are listed in Table 6.

### Examples 30-32

According to the composition shown in Table 7, a stock solution of the second layer was coated on the self-adhesive surface of A2 using a wet film preparation device, and then cured under the curing conditions of the second layer used, to obtain the second layer with a thickness of 100 µm. Then, the outer surface of the second layer of Examples 30-32 was detected by infrared spectroscopy.

Then, the film material for thermosetting resin molding was heated at 120°C for 10 min, and the outer surface of the second layer of Examples 30-32 was detected by infrared spectroscopy after heating.

The increase in content of isocyanate group was determined using the results from two infrared spectroscopy detections, and the results are listed in Table 7.

### Comparative Example 1

According to the composition shown in Table 8, a stock solution of the second layer C1 was coated on the non-release surface of the first layer A1 using a wet film preparation device, and then cured under the curing conditions of the second layer used, to obtain the second layer with a thickness of 100 µm. It was tested that the peeling strength of the first layer and the second layer was 35 N/cm, and the transferability of the second layer was ×, i.e., it could not be transferred.

The various Examples showed that the second layer of the film material for thermosetting resin molding of the present invention could be transferred to the surface of the thermosetting resin molded article during the molding of the thermosetting resin, and played beneficial effects.

**Table 1**

| Items | Exa mple 1 | Exa mple 2 | Exa mple 3 | Exa mple 4 | Exa mple 5 | Exa mple 6 | Exa mple 7 | Exa mple 8 | Exa mple 9 | Exa mple 10 | Exa mple 11 | Exa mple 12 |
|---|---|---|---|---|---|---|---|---|---|---|---|---|
| First layer | A1 | A1 | A1 | A1 | A1 | A1 | A2 | A2 | A2 | A3 | A3 | A3 |
| Second layer | B1 | B2 | B3 | B1 | B2 | B3 | B1 | B2 | B3 | B1 | B2 | B3 |
| Peeling strength (N/cm) | 28 | 25 | 28 | 0.07 | 0.05 | 0.07 | 7 | 5 | 6 | 0.7 | 0.3 | 0.5 |
| Light transmittance (%) | 90 | 30 | 60 | 90 | 30 | 60 | 90 | 30 | 60 | 90 | 30 | 60 |
| Color difference ΔE | 12 | 50 | 2 | 12 | 50 | 2 | 12 | 50 | 2 | 12 | 50 | 2 |
| Transferability | Δ | Δ | Δ | ○ | ○ | ○ | ○ | ○ | ○ | ○ | ○ | ○ |
| Epoxy resin binding force (MPa) | 10 | 7 | 8 | 10 | 7 | 9 | 10 | 7 | 9 | 10 | 8 | 9 |

**Table 2**

| Items | Example 13 | Example 14 | Example 15 |
|---|---|---|---|
| First layer | A2 | A2 | A2 |
| Second layer | B1 | B11 | B12 |
| Peeling strength (N/cm) | 7 | 7 | 7 |
| Light transmittance (%) | 90 | 25 | 87 |
| Color difference ΔE | 12 | 50 | 0.2 |
| Transferability | ○ | ○ | ○ |
| Epoxy resin binding force (MPa) | 10 | 9 | 10 |

**Table 3**

| Items | Example 16 | Example 17 | Example 18 | Example 19 | Example 20 | Example 21 | Example 22 |
|---|---|---|---|---|---|---|---|
| First layer | A2 | A2 | A2 | A2 | A2 | A2 | A2 |
| Second layer | B4 | B5 | B6 | B7 | B8 | B9 | B10 |
| Peeling strength (N/cm) | 8 | 7 | 7 | 6 | 8 | 8 | 7 |
| Light transmittance (%) | 90 | 90 | 89 | 90 | 90 | 89 | 90 |
| Color difference ΔE | 12 | 11 | 12 | 12 | 13 | 12 | 12 |
| Transferability | ○ | ○ | ○ | ○ | ○ | ○ | ○ |
| Epoxy resin binding force (MPa) | 11 | 12 | 11 | 11 | 11 | 14 | 11 |

**Table 4**

| Items | Example 23 | Example 24 |
|---|---|---|
| First layer | A2 | A2 |
| Second layer | B1 | B1 |
| Adhesive layer | C1 | C2 |
| Peeling strength (N/cm) | 7 | 7 |
| Light transmittance (%) | 90 | 90 |
| Color difference ΔE | 12 | 12 |
| Transferability | ○ | ○ |
| Epoxy resin binding force (MPa) | 10 | 10 |

**Table 5**

| Items | Example 25 | Example 26 | Example 27 |
|---|---|---|---|
| First layer | A1 | A2 | A3 |
| Second layer | B1 | B1 | B1 |
| Adhesive layer | C1 | C1 | C1 |
| Peeling strength (N/cm) | 1 | 9 | 2 |
| Light transmittance (%) | 88 | 90 | 90 |
| Color difference ΔE | 12 | 12 | 12 |
| Transferability | ○ | ○ | ○ |
| Epoxy resin binding force (MPa) | 10 | 10 | 10 |

**Table 6**

| Items | Example 28 | Example 29 |
|---|---|---|
| First layer | A2 | A2 |
| Second layer | B1 | B1 |
| Adhesive layer | C1 | C1 |
| Peeling strength (N/cm) | 7 | 7 |
| Light transmittance (%) | 90 | 90 |
| Color difference ΔE | 12 | 12 |
| Transferability | ○ | ○ |
| Epoxy resin binding force (MPa) | 11 | 14 |

**Table 7**

| Items | Example 30 | Example 31 | Example 32 |
|---|---|---|---|
| First layer | A2 | A2 | A2 |
| Second layer | B1 | B4 | B9 |
| Peeling strength (N/cm) | 7 | 7 | 8 |
| Light transmittance (%) | 90 | 90 | 90 |
| Color difference ΔE | 12 | 12 | 12 |
| Increase in content of isocyanate (%) | 0 | 6 | 15 |
| Transferability | ○ | ○ | ○ |
| Epoxy resin binding force (MPa) | 10 | 11 | 15 |

**Table 8**

| Items | Comparative Example 1 |
|---|---|
| First layer | A1 |
| Second layer | C1 |
| Peeling strength (N/cm) | 35 |
| Transferability | × |
| Epoxy resin binding force (MPa) | × |

## Claims

1. A film material for thermosetting resin molding, wherein the film comprises at least a first layer and a second layer, and there is an interface with a peeling strength of 0.02 to 30 N/cm between the first layer and the second layer at 23°C.

2. The film material for thermosetting resin molding according to claim 1, wherein the first layer comprises one or more of polyester resin, polyurethane resin, polycarbonate resin, polyolefin resin, acrylic resin, polyimide resin, polyamide resin, aramid resin, or fluororesin.

3. The film material for thermosetting resin molding according to claim 1, wherein the second layer comprises one or more of polyurethane resin, epoxy resin, unsaturated polyester resin, acrylic resin, or fluororesin.

4. The film material for thermosetting resin molding according to claim 1, wherein the thermosetting resin comprises one or more of epoxy resin, polyurethane resin, acrylic resin, unsaturated polyester resin, phenolic resin, melamino-formaldehyde resin, or furan resin.

5. The film material for thermosetting resin molding according to claim 1, wherein the second layer has an epoxy resin binding force of 6 MPa or more at 23°C.

6. The film material for thermosetting resin molding according to claim 3, wherein the second layer comprises one or more of compounds containing blocked isocyanate group, epoxy group, hydroxyl group, carboxyl group, anhydride group, or amine group.

7. The film material for thermosetting resin molding according to claim 6, wherein when the outer surface of the second layer is detected by infrared spectroscopy, the content of the isocyanate group in the film material for thermosetting resin molding is increased by 5-20% after being heated at 120°C for 10 min as compared to before heating.

8. The film material for thermosetting resin molding according to claim 1, wherein the second layer has a light transmittance of 20% or more.

9. The film material for thermosetting resin molding according to claim 1, wherein the color difference ΔE between the second layer and the thermosetting resin is 0.5 or more.

10. The film material for thermosetting resin molding according to claim 9, wherein the second layer comprises a coloring agent.

11. The film material for thermosetting resin molding according to claim 1, wherein at least one surface of the first layer has a surface tension of 40 mN/m or less.

12. The film material for thermosetting resin molding according to claim 1, further comprising a third layer, wherein at least one surface of the third layer has a surface tension of 40 mN/m or less.

13. The film material for thermosetting resin molding according to claim 12, wherein the third layer comprises one or more of compounds containing silicon and/or fluorine.

14. The film material for thermosetting resin molding according to claim 1, wherein the second layer has a thickness between 25 and 250 µm.

15. The film material for thermosetting resin molding according to claim 1, wherein the outer surface of the second layer has a roughness higher than 0.5 µm.

16. The film material for thermosetting resin molding according to claim 1, wherein the inner surface of the second layer has a roughness higher than 0.1 µm.

17. The film material for thermosetting resin molding according to claim 1, wherein the first layer is provided with the second layer on one side, and an adhesive layer on the other side.

18. The film material for thermosetting resin molding according to claim 17, wherein the adhesive layer comprises one or more of polyamide resin, polyurethane resin, acrylic resin, polyester resin, or silicone resin.

19. The film material for thermosetting resin molding according to claim 4, wherein the thermosetting resin further comprises an inorganic substance.

20. Use of the film material for thermosetting resin molding according to any one of claims 1-19 in the molding of a wind turbine blade.

21. A wind turbine blade manufactured from the film material for thermosetting resin molding according to any one of claims 1-19.
